# FASCICULE DE BREVET EUROPEEN

(11) **EP 3 186 133 B1**
(45) Date de publication et mention de la délivrance du brevet: **12.09.2018**
(21) Numéro de dépôt: 15759507.5
(22) Date de dépôt: 10.07.2015
(51) Int. Cl.: B62D 25/08, B62D 27/02, B62D 29/00

(54) **ASSEMBLAGE D'INSERTS DE RENFORT PAR UN MATÉRIAU POLYMÈRE ET FACE AVANT TECHNIQUE DE VÉHICULE AUTOMOBILE COMPRENANT UN TEL ASSEMBLAGE**
ANORDNUNG AUS VERSTÄRKUNGSEINSÄTZEN DURCH EIN POLYMERMATERIAL UND TECHNISCHE FRONTPLATTE EINES KRAFTFAHRZEUGS MIT EINER DERARTIGEN ANORDNUNG
ASSEMBLY OF REINFORCEMENT INSERTS BY A POLYMER MATERIAL AND TECHNICAL FRONT PANEL OF A MOTOR VEHICLE INCLUDING SUCH AN ASSEMBLY

(30) Priorité: 28.08.2014 FR 1458071
(43) Date de publication de la demande: 05.07.2017
(73) Titulaire: Renault S.A.S., 92100 Boulogne-Billancourt (FR)
(72) Inventeur: AESCHLIMANN, Jean-louis, F-78390 Bois d'Arcy (FR); FLANDIN, Michael, F-28410 Broue (FR)
(86) Numéro de dépôt international: PCT/FR2015/051913
(87) Numéro de publication internationale: WO 2016/030590

(56) Documents cités:
- EP-A1- 1 547 909
- EP-A1- 1 607 311
- EP-A1- 1 607 312
- WO-A1-2005/016724
- US-A1- 2004 105 949
- US-A1- 2011 133 517

## Description

L'invention concerne un assemblage d'inserts de renfort par un matériau polymère. En particulier, les inserts de renfort sont assemblés uniquement par le matériau polymère les recouvrant au moins partiellement.

Plus particulièrement, l'assemblage selon l'invention fait partie d'une face avant technique de véhicule automobile, notamment de la partie inférieure de celle-ci.

Le US 2011/133517 A1 et le US 2004/105949 A1 décrit un assemblage d'un premier insert de renfort longitudinal et d'un deuxième insert de renfort longitudinal par un matériau polymère les recouvrant au moins partiellement, chaque insert de renfort présentant une section transversale ouverte concave, notamment sensiblement en forme de U ou **Ω**, les directions longitudinales desdits inserts de renfort étant sensiblement perpendiculaires, un bord d'une extrémité du premier insert de renfort étant en appui contre le deuxième insert de renfort du côté convexe de celui-ci, le long d'une partie d'un bord d'une ouverture traversant ledit deuxième insert de renfort.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air (Refroidisseur Air Suralimentation- RAS) et du condenseur. La FAT intègre en outre différentes fonctions telles que support de butées de capot, support de serrure de capot ou d'un jambage supportant la serrure de capot, etc.

Pour un gain en compacité et en masse, certaines FAT forment un cadre obtenu par assemblage de deux traverses par des montants verticaux, ce cadre comprenant des inserts de renfort recouverts au moins partiellement de matériau polymère.

Pour assurer la rigidité d'un tel cadre, il s'avère nécessaire de fixer les inserts de renfort les uns aux autres. Cette fixation peut être réalisée avant de recouvrir les inserts d'un matériau polymère, par exemple par soudage, vissage ou rivetage, ou après, généralement par vissage ou rivetage. Ces opérations de fixation nécessitent cependant des opérations de positionnement et de fixation qui complexifient le procédé d'assemblage et augmentent les coûts d'assemblage.

Certaines solutions consistent à créer une zone de recouvrement et d'encastrement des inserts avant de les recouvrir de matériau polymère. Cette solution permet d'obtenir un assemblage robuste sans opération de soudage, vissage ou rivetage, mais résulte en un assemblage volumineux et lourd.

D'autres solutions consistent à réaliser une structure en deux parties distinctes inférieure et supérieure, chaque partie comprenant des portions de montants verticaux. Un tel assemblage est cependant volumineux et les deux parties ne sont pas reliées entre elles.

Une autre solution consiste enfin à positionner les inserts de sorte qu'ils ne se touchent pas et à les enrober de matériaux polymère. La tenue mécanique de cet assemblage résulte alors uniquement du matériau polymère reliant les inserts et est relativement limitée.

Il existe donc un besoin pour un assemblage robuste et léger d'inserts de renfort, qui peut être réalisé de manière simple et peu coûteuse.

L'invention vise à pallier ces inconvénients en proposant un assemblage d'un premier insert de renfort longitudinal et d'un deuxième insert de renfort longitudinal par un matériau polymère les recouvrant au moins partiellement, chaque insert de renfort présentant une section transversale ouverte concave, notamment sensiblement en forme de U ou Ω, les directions longitudinales desdits inserts de renfort étant sensiblement perpendiculaires, caractérisé en ce que
(a) un bord d'une extrémité du premier insert de renfort est en appui, notamment en appui direct, contre le deuxième insert de renfort du côté convexe de celui-ci, le long d'une partie d'un bord d'une ouverture traversant ledit deuxième insert de renfort, ou
(b) une extrémité du premier insert de renfort est emboîtée à l'intérieur de ladite ouverture traversant ledit deuxième insert de renfort du côté convexe de celui-ci, ladite extrémité étant en contact avec une partie d'un bord de ladite ouverture,
ladite ouverture étant de forme et dimension identiques ou sensiblement identiques aux forme et dimension de la section transversale de ladite extrémité du premier insert de renfort, un matériau polymère recouvrant au moins partiellement lesdits inserts de renfort au moins au niveau de leur jonction et formant au moins un élément de renfort, ledit élément de renfort présentant sensiblement une forme de L dont une première aile s'étend depuis le premier insert de renfort, au-dessus de ladite ouverture, et dont une deuxième aile s'étend depuis la première aile et rejoint une partie du bord de ladite ouverture, distincte de la partie de bord le long de laquelle le premier insert de renfort est en appui ou en contact.

Un tel assemblage présente l'avantage d'être robuste, sans nécessiter d'assemblage préalable des inserts de renfort par vissage, soudage, rivetage ou autre ou de recouvrement des inserts de renfort à assembler. Autrement dit, les inserts sont assemblés uniquement par le matériau polymère tout en restant en contact direct. Ceci permet un gain de temps au montage et un gain en poids de la structure.

Les inserts de renfort peuvent être métalliques ou en matériau polymère. Les inserts de renfort peuvent par exemple être en aluminium, en alliage à base d'aluminium ou en acier, notamment en acier inoxydable. Ils peuvent également être en polypropylène ou polyamide, éventuellement renforcé, par exemple par des fibres de verre, des fibres de carbone ou autres, ou tout autre matériau polymère présentant la rigidité recherchée.

Le matériau polymère enrobant au moins partiellement les inserts de renfort peut également être du polypropylène ou un polyamide.

Avantageusement, les inserts de renfort peuvent être formés de parois planes, ou sensiblement planes, reliées les unes aux autres suivant un bord longitudinal. Ceci permet de réaliser facilement des inserts robustes. Ainsi, un insert de renfort sensiblement en forme de U peut être formé de trois parois planes, ou sensiblement planes, reliées deux à deux, de préférence à angle droit ou sensiblement à angle droit. Un insert de renfort sensiblement en forme de Ω peut être formé de trois parois planes, ou sensiblement planes, reliées deux à deux, de préférence à angle droit ou sensiblement à angle droit, les deux parois d'extrémité comprenant sur un bord longitudinal libre, un rebord longitudinal perpendiculaire, ou sensiblement perpendiculaire, à la paroi dont il est solidaire.

Avantageusement, afin de simplifier la réalisation de l'assemblage, un seul élément de renfort peut être prévu, lequel s'étend par exemple le long de la totalité de la partie de bord de l'ouverture, distincte de la partie de bord le long de laquelle le premier insert de renfort est en appui ou en contact.

En particulier, l'élément de renfort peut être solidaire d'une face plane du premier insert de renfort, par exemple une face d'une paroi de fond d'une section en U ou Ω.

L'ouverture peut présenter une forme de quadrilatère, par exemple de rectangle, mais d'autres formes peuvent être envisageables.

L'assemblage selon l'invention peut en outre présenter une ou plusieurs des caractéristiques suivantes :
- chaque aile dudit au moins un élément de renfort s'étend parallèlement à la direction longitudinale de l'insert de renfort auquel elle n'est pas reliée. Ceci peut permettre d'améliorer la robustesse de la structure de support au niveau de la jonction des inserts de renfort.
- L'aile dudit élément de renfort rejoignant une partie du bord de ladite ouverture traverse l'ouverture et s'étend au-delà de celle-ci. Ceci peut également permettre d'améliorer la tenue de la structure de renfort au niveau de la jonction des inserts de renfort.
- Le matériau polymère forme au moins une nervure de rigidification s'étendant depuis une partie du bord de l'ouverture le long de laquelle le premier insert de renfort est en appui ou en contact, dans le prolongement du premier insert de renfort, notamment dans la continuité d'une couche de polymère recouvrant le premier insert de renfort à proximité de sa jonction avec le deuxième insert de renfort, au travers de l'ouverture et au-delà de celle-ci. Ceci peut permettre d'améliorer la robustesse de l'assemblage en réduisant les ruptures d'inertie. Notamment, les nervures peuvent s'étendre sur toute la hauteur de la concavité définie par le deuxième insert de renfort.
- Le matériau polymère forme des nervures de rigidification entrecroisées sur au moins une des faces d'au moins un insert de renfort, lesdites nervures de rigidification s'étendant sensiblement perpendiculairement à la direction longitudinale dudit insert de renfort et sensiblement parallèlement à la direction longitudinale de l'autre insert de renfort. De telles nervures participent également à l'amélioration de la tenue aux efforts de la structure de renfort. En particulier, ces nervures entrecroisées peuvent être solidaires d'une face plane de l'insert de renfort, par exemple une face d'une paroi de fond d'une section en U ou Ω, et s'étendre sensiblement perpendiculairement à cette paroi de fond.
- Une partie d'extrémité du premier insert de renfort, présentant ledit bord en appui contre le deuxième insert de renfort ou ladite extrémité emboîtée, est inclinée par rapport à la direction longitudinale dudit premier insert de renfort, l'aile de l'élément de renfort rejoignant ladite partie de bord d'ouverture s'étendant parallèlement à la direction longitudinale du premier insert de renfort, dans le prolongement d'une paroi de celui-ci. Une telle configuration permet d'augmenter la robustesse de la liaison en réduisant les ruptures d'inertie. La paroi considérée peut avantageusement être la paroi de fond d'une section en U ou Ω.
- Une ou plusieurs nervures de rigidification s'étendent parallèlement ou sensiblement parallèlement à la direction longitudinale du premier insert de renfort, à l'intérieur de la concavité définie par le deuxième insert de renfort, en regard de ladite ouverture, notamment entre des bords opposés de l'ouverture. Ceci peut également permettre d'améliorer la tenue de l'assemblage au niveau de la jonction des inserts de renfort, notamment en réduisant les risques de déformation du deuxième insert de renfort au niveau de la jonction.

L'invention concerne également une face avant technique de véhicule automobile comprenant au moins un assemblage selon l'invention, dans laquelle le deuxième insert de renfort forme une traverse horizontale, notamment inférieure, et le premier insert de renfort forme un montant vertical. Notamment, un autre premier insert de renfort peut former un deuxième montant vertical de la FAT, solidarisé au même deuxième insert de renfort que le premier insert de renfort. Le deuxième insert de renfort présente alors une deuxième ouverture similaire à l'ouverture précédemment décrite, pour l'assemblage de l'autre premier insert de renfort. En variante, la FAT pourrait comprendre une autre traverse horizontale, notamment supérieure, solidarisée de la même manière aux deux premiers inserts de renfort verticaux.

L'invention concerne également un procédé de fabrication d'un assemblage selon l'invention, cet assemblage comprenant au moins un premier insert de renfort longitudinal et au moins un deuxième insert de renfort longitudinal, chaque insert de renfort présentant une section transversale ouverte concave, notamment sensiblement en forme de U ou Ω, ledit procédé comprenant :
(i) une étape de positionnement desdits inserts de renfort dans un moule, dans laquelle les inserts de renfort sont disposés de sorte que leurs directions longitudinales soient sensiblement perpendiculaires, et au cours de laquelle :
   (a) un bord d'une extrémité du premier insert de renfort est appliqué contre le deuxième insert de renfort, notamment directement contre le deuxième insert de renfort, du côté convexe de celui-ci, le long d'une partie d'un bord d'une ouverture traversant ledit deuxième insert de renfort, ou
   (b) une extrémité du premier insert de renfort est emboîtée à l'intérieur de ladite ouverture traversant le deuxième insert de renfort, du côté convexe de celui-ci, ladite extrémité étant en contact avec une partie d'un bord de ladite ouverture,
   ladite ouverture étant de forme et dimension identiques ou sensiblement identiques aux forme et dimension de la section transversale du premier insert de renfort,
(ii) une étape d'injection d'un matériau polymère à l'intérieur du moule, au cours de laquelle un matériau polymère recouvre au moins partiellement lesdits inserts de renfort au moins au niveau de leur jonction et forme au moins un élément de renfort reliant les deux inserts de renfort, ledit élément de renfort présentant sensiblement une forme de L dont une première aile s'étend depuis le premier insert de renfort, au dessus de l'ouverture, et dont une deuxième aile s'étend depuis la première aile et rejoint une partie du bord de ladite ouverture, distincte de la partie de bord le long de laquelle le premier insert est en appui ou en contact.

L'assemblage selon l'invention est ainsi particulièrement simple à réaliser, l'étape d'injection permettant de réaliser à la fois l'injection de matériau polymère et l'assemblage des inserts de renfort, sans nécessiter d'étapes préalables ou ultérieures distinctes d'assemblage des inserts de renfort.

Avantageusement, au cours de la première étape (i), les inserts de renfort peuvent être disposés dans une première partie de moule suivant une première direction perpendiculaire aux directions longitudinales des premier et deuxième inserts de renfort, puis une deuxième partie de moule est appliquée contre la première partie de moule suivant ladite première direction et une troisième partie de moule est appliquée du côté concave du deuxième insert de renfort contre les première et deuxième parties de moule suivant une deuxième direction parallèle à la direction longitudinale du premier insert de renfort, ladite troisième partie de moule comportant une partie traversant l'ouverture du deuxième insert de renfort afin de former ledit élément de renfort.
- après l'étape d'injection (ii), les première et deuxième parties de moule sont séparées par un mouvement d'écartement parallèle à ladite première direction et la troisième partie de moule est ôtée par un mouvement d'écartement parallèle à ladite deuxième direction.

L'assemblage selon l'invention peut ainsi être réalisé de manière simple, par des mouvements de moule simples à mettre en oeuvre.

L'invention est maintenant décrite en référence aux dessins annexés, non limitatifs, dans lesquels :
- la figure 1 représente une vue en perspective partielle des inserts de renfort d'un assemblage selon l'invention, avant leur positionnement relatif ;
- la figure 2 représente une vue en perspective partielle des inserts de renfort représentés figure 1 prêts à être recouverts partiellement de matériau polymère ;
- la figure 3 représente une vue en perspective partielle d'un assemblage formé avec les inserts représentés figures 1 et 2 ;
- la figure 4 représente une section de cet assemblage suivant la ligne A-A de la figure 3 ;
- les figures 5 à 7 représentent des vues en perspective partielle d'un assemblage selon d'autres modes de réalisation de l'invention, au niveau de la jonction de deux inserts de renfort ;
- les figures 8a et 8b sont des sections des parties de moule utilisées pour réaliser un assemblage selon un mode de réalisation de l'invention.

Sur les figures, les mêmes éléments sont désignés par les mêmes références.

Dans la présente description, les termes avant, arrière, supérieur, inférieur, font référence aux directions avant et arrière d'un véhicule, lorsque l'assemblage est monté sur un véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

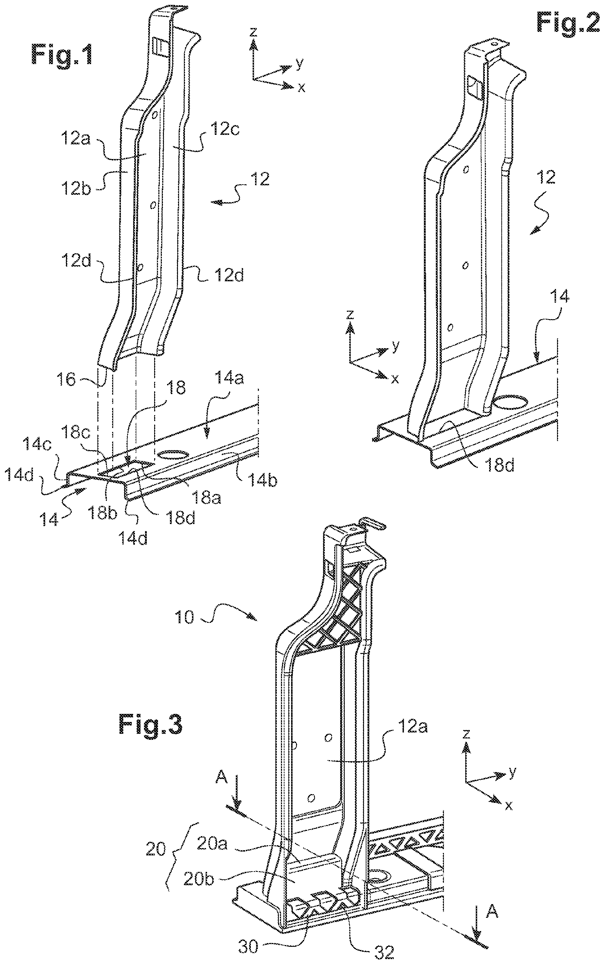

La figure 1 représente un premier insert renfort de longitudinal 12 s'étendant verticalement et un deuxième insert de renfort longitudinal 14 s'étendant horizontalement. Tel que représenté sur cette figure, les directions longitudinales de ces inserts de renfort, 12, 14, sont perpendiculaires. Les premier et deuxième inserts de renfort 12, 14, vont permettre de réaliser un assemblage 10 selon un mode de réalisation de l'invention, tel que décrit ci-après.

Dans le mode de réalisation représenté sur les figures 1 à 4, un bord 16 d'une extrémité du premier insert 12 est appliqué contre le deuxième insert de renfort 14, du côté convexe de celui-ci, le long d'une partie d'un bord d'une ouverture 18 traversant ce deuxième insert de renfort 14.

Chaque insert de renfort 12, 14, présente une section transversale ouverte concave. Ici, il s'agit d'une forme sensiblement en Ω, formé par des parois planes. Autrement dit, l'insert de renfort est formé de plusieurs parois planes reliées les unes aux autres par un bord longitudinal, de section transversale similaire à un Ω.

Ainsi, le premier insert 12 comprend une paroi de fond 12a et deux parois latérales 12b, 12c, de part et d'autre de la paroi de fond 12a. Chacune de ces parois latérales 12b, 12d, présente un rebord 12d s'étendant parallèlement à la paroi de fond 12a, à l'extérieur de l'insert. De manière similaire, le deuxième insert 14 comprend une paroi de fond plane 14a encadrée par deux parois latérales 14b, 14c, chacune de ces parois latérales 14b et 14c présentant un rebord 14d dirigé vers l'extérieur de l'insert.

Dans l'exemple représenté, la paroi de fond 12a du premier insert de renfort 12 s'étend perpendiculairement à la paroi de fond 14a du deuxième insert de renfort 14, et parallèlement à la direction longitudinale du deuxième insert de renfort 14. Cet agencement permet de réduire l'encombrement de l'assemblage des premier et deuxième inserts de renfort.

Le deuxième insert de renfort 14 présente en outre une ouverture 18 de forme et dimension identiques aux formes et dimensions de la section transversale du premier insert de renfort 12. Cette ouverture 18 présente ici une forme rectangulaire correspondant sensiblement à la section des parois de fond et latérales 12a, 12b, 12c du premier insert de renfort 12.

Ainsi, le bord 16 du premier insert de renfort 12 peut être appliqué (directement) contre une partie du bord de l'ouverture 18, à savoir ici trois des bords 18a, 18b, 18c de l'ouverture rectangulaire 18.

Ceci est représenté à la figure 2 sur laquelle on peut voir que le bord 16 du premier insert 12 est appliqué contre les bords 18a 18b, 18c de l'ouverture 18, le quatrième bord 18d de l'ouverture restant libre.

Tel que représenté sur la figure 3, l'assemblage 10, comprenant le premier insert de renfort 12 et le deuxième insert de renfort 14 est recouvert partiellement d'un matériau polymère. Ce matériau polymère permet notamment d'augmenter la rigidité des inserts de renfort 12 et 14, mais également assure l'assemblage de ces inserts.

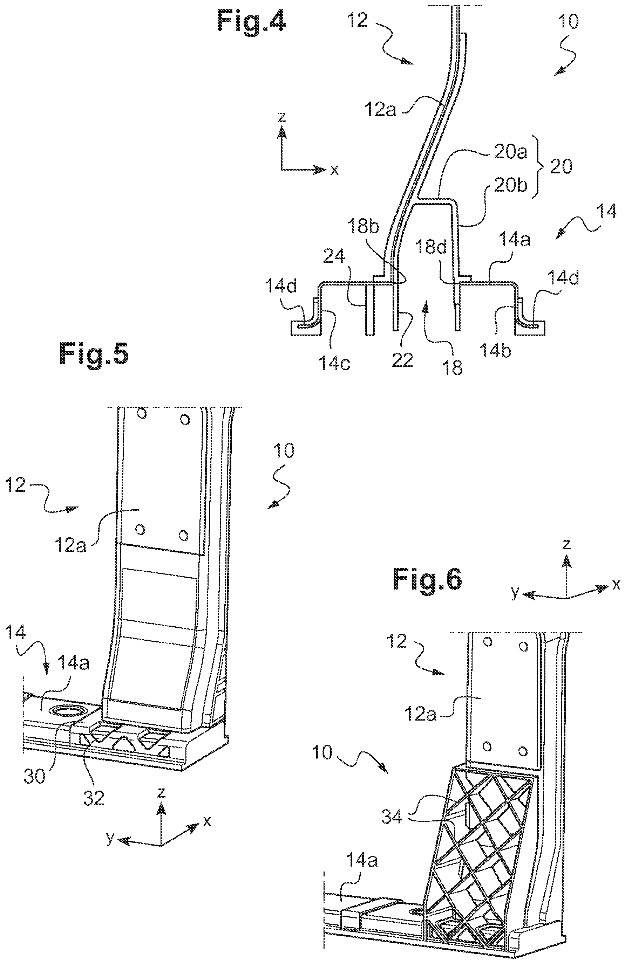

En particulier, selon l'invention, le matériau polymère forme, au niveau de la jonction des premier et deuxième inserts de renfort 12 et 14, un élément de renfort 20 présentant sensiblement une forme de L. Une première aile 20a de cet élément de renfort 20 s'étend depuis le premier insert de renfort 12, au-dessus de l'ouverture 18, et une deuxième aile 20b de cet élément de renfort 20 s'étend depuis la première aile 20a et rejoint une partie du bord de l'ouverture 18. Dans l'exemple représenté sur les figures 3 et 4, la première aile 20a s'étend depuis la paroi de fond 12a du premier insert de renfort 12, sensiblement parallèlement à la paroi de fond 14a du deuxième insert. La deuxième aile 20b s'étend quant à elle perpendiculairement à la paroi de fond 14a du deuxième insert de renfort 14 et parallèlement à la paroi de fond 12a du premier insert de renfort 12. Elle rejoint le bord 18d de l'ouverture, à savoir le bord le long duquel ne s'étend pas le premier insert de renfort 12 (voir figures 2 et 4.)

Dans l'exemple représenté sur les figures 1-4, et tel que visible plus particulièrement sur la figure 4, la partie d'extrémité du premier insert de renfort 12 comportant le bord 16 appliqué le long du bord de l'ouverture 18, est incliné par rapport à la direction longitudinale de ce premier insert 12.Cette inclinaison est choisie de manière à ce que la deuxième aile 20b de l'élément de renfort 20 s'étende parallèlement à la direction longitudinale du premier élément de renfort 12, dans le prolongement de la paroi de fond 12a de ce dernier. On évite ainsi une rupture d'inertie entre le premier et le deuxième inserts de renfort 12, 14.

On notera en outre que dans l'exemple représenté figures 1 à 4, le bord 16 du premier insert de renfort 12 est situé sur une portion du premier insert de renfort 12 qui s'étend parallèlement à la direction longitudinale, de sorte que le matériau polymère surmoulé puisse être réalisé ou s'étendre parallèlement à la direction longitudinale du premier insert 12 à proximité de l'ouverture 18 améliorant ainsi la tenue et la robustesse de la jonction.

Le matériau polymère peut en outre former diverses nervures de rigidification permettant de renforcer la jonction entre les deux inserts de renfort 12, 14. De préférence, ces nervures de rigidification présentent une épaisseur sensiblement constante, semblable à l'épaisseur de la couche de matériau polymère recouvrant les inserts.

Tel que visible plus particulièrement sur la figure 4, l'assemblage 10 présente ainsi une nervure de rigidification 22 s'étendant depuis une partie du bord de l'ouverture 18 le long de laquelle s'étend le premier insert 12 dans le prolongement de ce dernier. La nervure 22 est également formée dans le matériau polymère qui recouvre partiellement l'assemblage 10. Ici, cette nervure 22 s'étend dans le prolongement de la paroi de fond 12a du premier insert de renfort 20, cette nervure 22 s'étend au travers de l'ouverture 18 et au-delà du bord 18b de celle-ci, notamment sur toute la hauteur de la concavité définie par le deuxième insert de renfort 14 (hauteur mesurée suivant la direction longitudinale du premier insert de renfort 12). De manière similaire, l'aile 20b de l'élément de renfort 20 se prolonge au-delà de l'ouverture 18, notamment de son bord 18d, à l'intérieur de la concavité définie par le deuxième insert de renfort 14, également sur toute la hauteur de la concavité.

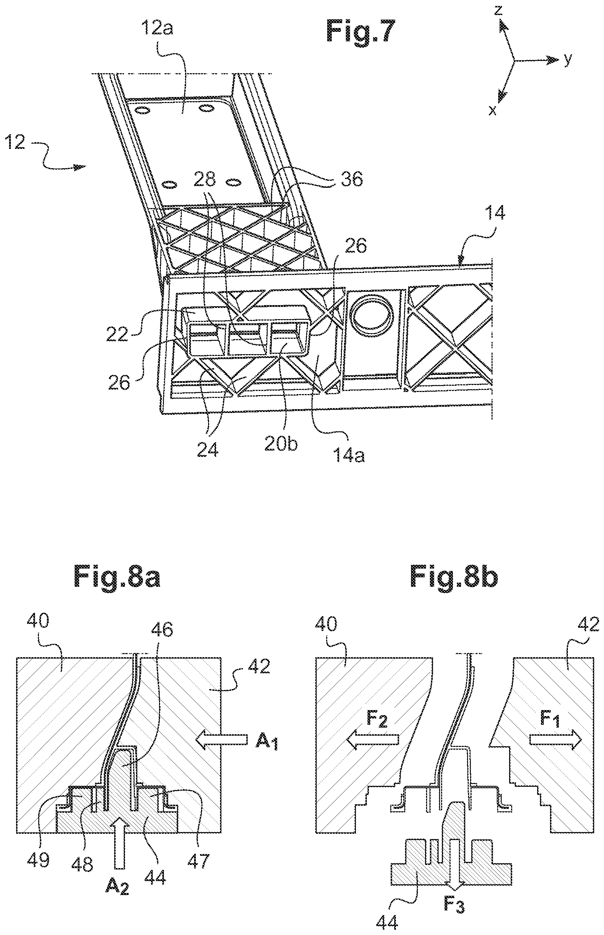

En outre, tel que visible plus particulièrement sur la figure 7, le matériau polymère peut former des nervures de rigidification 24 entrecroisées sur la paroi de fond 14a du deuxième insert 14, du côté de sa concavité, sur toute la hauteur de celle-ci. On notera également, en référence à la figure 7, que des nervures 26 s'étendent à l'intérieur de la concavité définie par le deuxième insert 14, sur la hauteur de celle-ci depuis les bords 18a et 18c de l'ouverture 18, dans le prolongement des parois latérales 12c, 12b, respectivement du premier insert de renfort 12. Ces nervures 26 prolongent avantageusement une couche de matériau polymère recouvrant les parois latérales 12c, 12b. Les nervures 22, 26 et l'aile 20b sont ici solidaires les unes des autres. Autrement dit, et indépendamment de toute autre caractéristique de l'assemblage selon l'invention, les nervures 22, 26 et l'aile 20b définissent à l'intérieur de la concavité définie par le deuxième insert de renfort 14, un cadre dans le prolongement des bords de l'ouverture 18, et dans le prolongement de matériau polymère recouvrant au moins partiellement le premier insert de renfort 12, assurant ainsi une continuité entre les premier et deuxième inserts de renfort 12, 14 pour une meilleure inertie.

D'autres nervures 28 (figure 7) s'étendent également à l'intérieur de la concavité définie par le deuxième insert 14, sur la hauteur de celle-ci, depuis les bords 18b et 18d de l'ouverture 18 et en regard de celle-ci, améliorant la rigidité de la jonction au niveau de cette ouverture 18.

On notera que le matériau polymère recouvre entièrement le premier insert de renfort 12 au niveau de sa jonction avec le deuxième insert de renfort 14, et plus précisément depuis le deuxième insert de renfort 14 jusqu'à la fin de la partie inclinée du premier insert 12. Ceci permet notamment d'assurer une continuité du matériau polymère afin de former l'élément de renfort 20 tout en améliorant la rigidité de l'ensemble.

Dans le mode de réalisation représenté figure 5, le deuxième insert de renfort 14 est quant à lui partiellement recouvert de matériau polymère sur sa paroi externe, autrement dit, sur ses faces convexes. Notamment sur la figure 5, la référence 30 désigne une bande de polymère épousant la surface externe du deuxième insert de renfort 14 avec des ajours 32 permettant de réduire la quantité de matière utilisée. Cette forme maillée présente l'avantage d'apporter une bonne tenue mécanique tout en réduisant la quantité de matière utilisée. Ce type de maillage est visible également sur la figure 3.

D'autres nervures de rigidification peuvent être réalisées dans le matériau polymère afin de rigidifier l'assemblage 10.

Ainsi, dans le mode de réalisation représenté sur la figure 6, des nervures de rigidification 34 entrecroisées s'étendent sur la face convexe du premier insert de renfort 12 notamment depuis sa paroi de fond 12a. Ces nervures 34 s'étendent perpendiculairement à la direction longitudinale du premier insert de renfort 12, et à sa paroi de fond 12a, et parallèlement à la direction longitudinale du deuxième insert de renfort 14.

Dans l'exemple représenté sur la figure 7, des nervures de rigidification entrecroisées 36 s'étendent à l'intérieur de la concavité définie par le premier insert de renfort 12, depuis sa paroi de fond 12a Ces nervures 36 s'étendent également perpendiculairement à la direction longitudinale du premier insert de renfort 12, et à sa paroi de fond 12a, et parallèlement à la direction longitudinale du deuxième insert de renfort 14. Elles remplissent toute l'épaisseur de la concavité définie par le premier insert de renfort 12.

Il est possible de prévoir de telles nervures de rigidification 34, 36 sur chacune des faces convexes et concaves du premier insert de renfort 12 ainsi qu'à l'intérieur de la concavité du deuxième insert de renfort 14 En variante, seule l'une des faces du premier insert de renfort 12 peuvent être pourvues de ces nervures de rigidification. Tel que visible sur les figures 6 et 7, ces nervures de rigidification entrecroisées 34 ou 36 s'étendent préférentiellement le long de la partie inclinée du premier insert de renfort 12, voire recouvrent le changement de pente entre la partie d'extrémité inclinée et le reste de l'insert de renfort 12 plan.

Autrement dit, ces nervures de rigidification 34, 36 s'étendent préférentiellement au niveau de la jonction du premier insert de renfort 12 et du deuxième insert de renfort 14, permettant ainsi d'augmenter la robustesse de l'assemblage 10, au niveau de la jonction des premier et deuxième inserts de renfort 12 et 14.

Les différents agencements de nervures décrits en référence aux les figures 3-7 peuvent être combinés les uns aux autres.

Le procédé de fabrication d'un assemblage selon l'invention va maintenant être décrit en référence aux figures 8a, 8b.

Tel que visible sur ces figures, le surmoulage du matériau polymère sur les inserts de renfort est de préférence réalisé par injection dans un moule réalisé en plusieurs parties.

Une première partie de moule 40, également appelée matrice, reçoit les inserts de renfort 12, 14 suivant une première direction A1 perpendiculaire aux directions longitudinales des premier et deuxième inserts de renfort 12, 14. Cette première partie de moule 40 est partiellement refermée par une deuxième partie de moule 42, également appelée poinçon, qui vient s'emboîter sur la première partie de moule 40 suivant cette direction A1. Une troisième partie de moule 44, également appelée tiroir ou sabot, vient fermer les première et deuxième partie de moule 40, 42 suivant une deuxième direction A2 perpendiculaire à la direction longitudinale du deuxième insert 14 et parallèlement à la direction longitudinale du premier insert 12. Cette troisième partie de moule vient refermer les première et deuxième parties de moule du côté de la face concave du deuxième insert de renfort 14. La troisième partie de moule 44 comporte une partie 46 traversant l'ouverture 18 du premier insert de manière à pouvoir définir avec la première partie de moule 40 l'élément de renfort 20 qui va assembler et rigidifier l'assemblage des premier et deuxième inserts de renfort. Cette troisième partie de moule 44 comprend d'autres parties saillantes 47, 48, 49 permettant de réaliser des nervures de rigidification 26, 24, 22 du côté de la concavité du deuxième insert de renfort 14. Une fois le moule fermé, le matériau polymère peut être injecté à l'intérieur de manière à recouvrir les premier et deuxième inserts de renfort aux endroits initialement prévus. A l'issue de l'étape d'injection, les parties de moules 40, 42 et 44 sont séparées par écartement selon les flèches F1, F2 et F3 représentées sur la figure 8B, les flèches F1 et F2 s'étendant parallèlement à la première direction A1, alors que la flèche F3 s'étend parallèlement à la deuxième direction A2.

On obtient ainsi de manière simple et rapide un assemblage 10 robuste, sans étape de pré-assemblage des inserts de renfort 12 et 14 dans la mesure où le positionnement des premier et deuxième inserts de renfort 12, 14 à l'intérieur du moule permet de maintenir ceux-ci dans la position représentée sur la figure 2 avant l'injection du matériau polymère.

Sur les figures, le deuxième insert de renfort 14 forme par exemple une traverse inférieure de FAT de véhicule automobile. Dans ce cas, tel que représenté, l'ouverture 18 peut être disposée à une première extrémité du deuxième insert de renfort 14 pour sa fixation au premier insert de renfort 12 formant un montant de la FAT. Ce deuxième insert de renfort 14 comprend une autre ouverture 18 à son autre extrémité, contre laquelle est en appui un autre montant similaire au premier insert de renfort 12 représenté et fixé de la même manière. Les parties supérieures des montants sont alors fixées à une traverse supérieure de la FAT (non représentée) par un assemblage similaire ou par tout autre assemblage.

Dans un mode de réalisation non représenté, le premier insert de renfort 12 peut être emboité dans l'ouverture 18, ses parois étant alors en contact avec les bords 18a-18c de l'ouverture 18. Dans ce cas, de préférence, le bord 16 d'extrémité du premier insert de renfort 12 ne saille pas hors de la concavité définie par le deuxième insert de renfort 14. Les parois du premier insert de renfort 12 peuvent alors remplacer les nervures 22 et 26 du mode de réalisation représenté sur les figures.

## Revendications

1. Assemblage (10) d'un premier insert de renfort longitudinal (12) et d'un deuxième insert de renfort longitudinal (14) par un matériau polymère les recouvrant au moins partiellement, chaque insert de renfort (12, 14) présentant une section transversale ouverte concave, notamment sensiblement en forme de U ou Ω, les directions longitudinales desdits inserts de renfort (12, 14) étant sensiblement perpendiculaires, **caractérisé en ce que** :
(a) un bord (16) d'une extrémité du premier insert de renfort (12) est en appui contre le deuxième insert de renfort (14) du côté convexe de celui-ci, le long d'une partie (18a-c) d'un bord d'une ouverture (18) traversant ledit deuxième insert de renfort (14), ou
(b) une extrémité du premier insert de renfort (12) est emboîtée à l'intérieur de ladite ouverture (18) traversant ledit deuxième insert de renfort du côté convexe de celui-ci, ladite extrémité étant en contact avec une partie (18a-c) d'un bord de ladite ouverture (18),
ladite ouverture (18) étant de forme et dimension identiques ou sensiblement identiques aux forme et dimension de la section transversale de ladite extrémité du premier insert de renfort (12), un matériau polymère recouvrant au moins partiellement lesdits inserts de renfort au moins au niveau de leur jonction et formant au moins un élément de renfort (20), ledit élément de renfort présentant sensiblement une forme de L dont une première aile (20a) s'étend depuis le premier insert de renfort (12), au-dessus de ladite ouverture (18), et dont une deuxième aile (20b) s'étend depuis la première aile (20a) et rejoint une partie (18d) du bord de ladite ouverture (18), distincte de la partie de bord (18a-c) le long de laquelle le premier insert de renfort (12) est en appui ou en contact.

2. Assemblage (10) selon la revendication 1, **caractérisé en ce que** chaque aile (20a, 20b) dudit au moins un élément de renfort (20) s'étend parallèlement à la direction longitudinale de l'insert de renfort (12, 14) auquel elle n'est pas reliée.

3. Assemblage (10) selon la revendication 1 ou 2, **caractérisé en ce que** l'aile (20b) dudit élément de renfort (20), rejoignant une partie (18d) du bord de ladite ouverture (18), traverse l'ouverture (18) et s'étend au-delà de celle-ci.

4. Assemblage (10) selon l'une quelconque des revendications 1 à 3, **caractérisé en ce que** le matériau polymère forme au moins une nervure de rigidification (22, 26) s'étendant depuis une partie du bord de l'ouverture (18) le long de laquelle le premier insert de renfort (12) est en appui ou en contact, dans le prolongement du premier insert de renfort (12), au travers de l'ouverture et au-delà de celle-ci.

5. Assemblage (10) selon l'une quelconque des revendications 1 à 4, **caractérisé en ce que** le matériau polymère forme des nervures de rigidification entrecroisées (24, 34, 36) sur au moins une des faces d'au moins un insert de renfort, lesdites nervures de rigidification s'étendant sensiblement perpendiculairement à la direction longitudinale dudit insert et sensiblement parallèlement à la direction longitudinale de l'autre insert.

6. Assemblage (10) selon l'une quelconque des revendications 1 à 5, **caractérisé en ce qu'**une partie d'extrémité du premier insert de renfort (12), présentant ledit bord (16) en appui contre le deuxième insert de renfort (14) ou ladite extrémité emboîtée, est inclinée par rapport à la direction longitudinale dudit premier insert de renfort (12), l'aile (20b) de l'élément de renfort rejoignant ladite partie (18d) de bord d'ouverture s'étendant parallèlement à la direction longitudinale du premier insert de renfort (12), dans le prolongement d'une paroi de celui-ci.

7. Assemblage (10) selon l'une quelconque des revendications 1 à 6, **caractérisé en ce qu'**une ou plusieurs nervures de rigidification (28) s'étendent parallèlement ou sensiblement parallèlement à la direction longitudinale du premier insert de renfort (12), à l'intérieur de la concavité définie par le deuxième insert de renfort (14), en regard de ladite ouverture (18), notamment entre des bords opposés de l'ouverture.

8. Face avant technique de véhicule automobile comprenant au moins un assemblage (10) selon l'une quelconque des revendications 1 à 7, dans laquelle le deuxième insert de renfort (14) forme une traverse horizontale, notamment inférieure, et le premier insert de renfort (12) forme un montant vertical.

9. Procédé de fabrication d'un assemblage (10) comprenant un premier insert de renfort longitudinal (12) et un deuxième insert de renfort longitudinal (14), chaque insert de renfort (12, 14) présentant une section transversale ouverte concave, notamment sensiblement en forme de U ou Ω, ledit procédé comprenant :
(i) une étape de positionnement desdits inserts de renfort (12, 14) dans un moule (40, 42, 44), dans laquelle les inserts de renfort (12, 14) sont disposés de sorte que leurs directions longitudinales soient sensiblement perpendiculaires, et au cours de laquelle :
(a) un bord (16) d'une extrémité du premier insert de renfort (12) est appliqué contre le deuxième insert (14), du côté convexe de celui-ci, le long d'une partie d'un bord d'une ouverture (18) traversant ledit deuxième insert de renfort (14), ou
(b) une extrémité du premier insert de renfort est emboîtée à l'intérieur de ladite ouverture (18) traversant le deuxième insert de renfort (14), du côté convexe de celui-ci, ladite extrémité étant en contact avec une partie d'un bord de ladite ouverture,
ladite ouverture (18) étant de forme et dimension identiques ou sensiblement identiques aux forme et dimension de la section transversale du premier insert de renfort (12),
(ii) une étape d'injection d'un matériau polymère à l'intérieur du moule (40, 42, 44), au cours de laquelle un matériau polymère recouvre au moins partiellement lesdits inserts de renfort (12, 14) au moins au niveau de leur jonction et forme au moins un élément de renfort (20) reliant les deux inserts de renfort (12, 14), ledit élément de renfort (20) présentant sensiblement une forme de L dont une première aile (20a) s'étend depuis le premier insert de renfort (12), au dessus de l'ouverture (18), et dont une deuxième aile (20b) s'étend depuis la première aile (20a) et rejoint une partie (18d) du bord de ladite ouverture (18), distincte de la partie de bord le long de laquelle le premier insert est en appui ou en contact.

10. Procédé de fabrication selon la revendication 9, dans lequel
- au cours de la première étape (i), les inserts de renfort (12, 14) sont disposés dans une première partie de moule (40) suivant une première direction (A1) perpendiculaire aux directions longitudinales des premier et deuxième inserts de renfort (12, 14), puis une deuxième partie de moule (42) est appliquée contre la première partie de moule (40) suivant ladite première direction (A1) et une troisième partie de moule (44) est appliquée du côté concave du deuxième insert de renfort (44) contre les première et deuxième parties de moule (40, 42) suivant une deuxième direction (A2) parallèle à la direction longitudinale du premier insert de renfort (12), ladite troisième partie de moule (44) comportant une partie (46) traversant l'ouverture (18) du deuxième insert de renfort (14) afin de former ledit élément de renfort (20).
- après l'étape d'injection (ii), les première et deuxième parties de moule (40, 42) sont séparées par un mouvement d'écartement parallèle à ladite première direction (A1) et la troisième partie de moule (44) est ôtée par un mouvement d'écartement parallèle à ladite deuxième direction (A2).

## Patentansprüche

1. Zusammenbau (10) eines ersten Längsverstärkungseinsatzes (12) und eines zweiten Längsverstärkungseinsatzes (14) durch ein sie zumindest teilweise bedeckendes Polymermaterial, wobei jeder Verstärkungseinsatz (12, 14) einen konkaven offenen Querschnitt aufweist, insbesondere im Wesentlichen in Form eines U oder Ω, wobei die Längsrichtungen der Verstärkungseinsätze (12, 14) im Wesentlichen lotrecht sind, **dadurch gekennzeichnet, dass**:
(a) ein Rand (16) eines ersten Endes des ersten Verstärkungseinsatzes (12) gegen den zweiten Verstärkungseinsatz (14) auf dessen konvexer Seite entlang eines Bereichs (18a-c) eines Rands einer den zweiten Verstärkungseinsatz (14) durchquerenden Öffnung (18) in Anlage ist, oder
(b) ein Ende des ersten Verstärkungseinsatzes (12) ins Innere der den zweiten Verstärkungseinsatz auf dessen konvexer Seite durchquerenden Öffnung (18) eingesteckt ist, wobei das Ende mit einem Bereich (18a-c) eines Rands der Öffnung (18) in Kontakt ist,
wobei die Öffnung (18) eine gleiche oder im Wesentlichen gleiche Form und Abmessung hat wie die Form und die Abmessung des Querschnitts des Endes des ersten Verstärkungseinsatzes (12), wobei ein Polymermaterial die Verstärkungseinsätze zumindest im Bereich ihrer Verbindung zumindest teilweise bedeckt und mindestens ein Verstärkungselement (20) bildet, wobei das Verstärkungselement im Wesentlichen die Form eines L hat, von dem ein erster Schenkel (20a) sich vom ersten Verstärkungseinsatz (12) oberhalb der Öffnung (18) erstreckt, und von dem ein zweiter Schenkel (20b) sich vom ersten Schenkel (20a) erstreckt und an einen Bereich (18d) des Rands der Öffnung (18) anschließt, der sich von dem Randbereich (18a-c) unterscheidet, entlang dessen der erste Verstärkungseinsatz (12) in Auflage oder Kontakt ist.

2. Zusammenbau (10) nach Anspruch 1, **dadurch gekennzeichnet, dass** jeder Schenkel (20a, 20b) des mindestens einen Verstärkungselements (20) sich parallel zur Längsrichtung des Verstärkungseinsatzes (12, 14) erstreckt, mit dem er nicht verbunden ist.

3. Zusammenbau (10) nach Anspruch 1 oder 2, **dadurch gekennzeichnet, dass** der Schenkel (20b) des Verstärkungselements (20), der an einen Bereich (18d) des Rands der Öffnung (18) anschließt, die Öffnung (18) durchquert und sich jenseits von ihr erstreckt.

4. Zusammenbau (10) nach einem der Ansprüche 1 bis 3, **dadurch gekennzeichnet, dass** das Polymermaterial mindestens eine Versteifungsrippe (22, 26) bildet, die sich von einem Bereich (18a-c) des Rands der Öffnung (18), entlang dessen der erste Verstärkungseinsatz (12) in Auflage oder in Kontakt ist, in der Verlängerung des ersten Verstärkungseinsatzes (12) durch die Öffnung hindurch und jenseits von ihr erstreckt.

5. Zusammenbau (10) nach einem der Ansprüche 1 bis 4, **dadurch gekennzeichnet, dass** das Polymermaterial sich kreuzende Versteifungsrippen (24, 34, 36) auf mindestens einer der Seiten mindestens eines Verstärkungseinsatzes bildet, wobei die Versteifungsrippen sich im Wesentlichen lotrecht zur Längsrichtung des Einsatzes und im Wesentlichen parallel zur Längsrichtung des anderen Einsatzes erstrecken.

6. Zusammenbau (10) nach einem der Ansprüche 1 bis 5, **dadurch gekennzeichnet, dass** ein Endbereich des ersten Verstärkungseinsatzes (12), der den Rand (16) in Auflage gegen den zweiten Verstärkungseinsatz (14) oder das eingesteckte Ende aufweist, bezüglich der Längsrichtung des ersten Verstärkungseinsatzes (12) geneigt ist, wobei der Schenkel (20b) des Verstärkungselements, der an den Öffnungsrandbereich (18d) anschließt, sich parallel zur Längsrichtung des ersten Verstärkungseinsatzes (12) in der Verlängerung einer Wand von diesem erstreckt.

7. Zusammenbau (10) nach einem der Ansprüche 1 bis 6, **dadurch gekennzeichnet, dass** eine oder mehrere Versteifungsrippen (28) sich parallel oder im Wesentlichen parallel zur Längsrichtung des ersten Verstärkungseinsatzes (12) im Inneren der vom zweiten Verstärkungseinsatz (14) definierten Konkavität gegenüber der Öffnung (18), insbesondere zwischen gegenüberliegenden Rändern der Öffnung, erstrecken.

8. Frontendmodul eines Kraftfahrzeugs, das mindestens einen Zusammenbau (10) nach einem der Ansprüche 1 bis 7 enthält, wobei der zweite Verstärkungseinsatz (14) einen waagrechten, insbesondere unteren Querträger bildet, und der erste Verstärkungseinsatz (12) eine senkrechte Säule bildet.

9. Verfahren zur Herstellung eines Zusammenbaus (10), der einen ersten Längsverstärkungseinsatz (12) und einen zweiten Längsverstärkungseinsatz (14) enthält, wobei jeder Verstärkungseinsatz (12, 14) einen konkaven offenen Querschnitt aufweist, insbesondere im Wesentlichen in Form eines U oder Ω, wobei das Verfahren enthält:
(i) einen Schritt der Positionierung der Verstärkungseinsätze (12, 14) in einer Form (40, 42, 44), in der die Verstärkungseinsätze (12, 14) so angeordnet werden, dass ihre Längsrichtungen im Wesentlichen lotrecht sind, und während dessen:
(a) ein Rand (16) eines Endes des ersten Verstärkungseinsatzes (12) gegen den zweiten Einsatz (14) auf dessen konvexer Seite entlang eines Bereichs (18a-c) eines Rands einer den Verstärkungseinsatz (14) durchquerenden zweiten Öffnung (18) angelegt wird, oder
(b) ein Ende des ersten Verstärkungseinsatzes ins Innere der den zweiten Verstärkungseinsatz (14) durchquerenden Öffnung (18) auf dessen konvexer Seite eingesteckt wird, wobei das Ende mit einem Bereich (18a-c) eines Rands der Öffnung in Kontakt ist,
wobei die Öffnung (18) gleiche oder im Wesentlichen gleiche Form und Abmessung hat wie die Form und die Abmessung des Querschnitts des ersten Verstärkungseinsatzes (12),
(ii) einen Schritt des Einspritzens eines Polymermaterials ins Innere der Form (40, 42, 44), während dessen ein Polymermaterial zumindest teilweise die Verstärkungseinsätze (12, 14) mindestens im Bereich ihrer Verbindung bedeckt und und mindestens ein Verstärkungselement (20) bildet, das die zwei Verstärkungseinsätze (12, 14) verbindet, wobei das Verstärkungselement (20) im Wesentlichen die Form eines L aufweist, von dem ein erster Schenkel (20a) sich vom ersten Verstärkungseinsatz (12) über der Öffnung (18) erstreckt, und von dem ein zweiter Schenkel (20b) sich vom ersten Schenkel (20a) erstreckt und an einen Bereich (18d) düs Rands der Öffnung (18) anschließt, der sich von dem Randbereich (18a-c) unterscheidet, entlang dessen der erste Einsatz in Auflage oder in Kontakt ist.

10. Herstellungsverfahren nach Anspruch 9, wobei
- während des ersten Schritts (i) die Verstärkungseinsätze (12, 14) in einem ersten Formbereich (40) gemäß einer ersten Richtung (A1) lotrecht zu den Längsrichtungen der ersten und zweiten Verstärkungseinsätze (12, 14) angeordnet werden, dann ein zweiter Formbereich (42) gegen den ersten Formbereich (40) gemäß der ersten Richtung (A1) angelegt wird, und ein dritter Formbereich (44) auf der konkaven Seite des zweiten Verstärkungseinsatzes (44) gegen den ersten und den zweiten Formbereich (40, 42) gemäß einer zweiten Richtung (A2) parallel zur Längsrichtung des ersten Verstärkungseinsatzes (12) angelegt wird, wobei der dritte Formbereich (44) einen die Öffnung (18) des zweiten Verstärkungseinsatzes (14) durchquerenden Bereich (46) aufweist, um das Verstärkungselement (20) zu bilden,
- nach dem Schritt des Einspritzens (ii) der erste und der zweite Formbereich (40, 42) durch eine Spreizbewegung parallel zur ersten ersten Richtung (A1) getrennt werden, und der dritte Formbereich (44) durch eine Spreizbewegung parallel zur zweiten Richtung (A2) entnommen wird.

## Claims

1. Assembly (10) of a first longitudinal reinforcement insert (12) and a second longitudinal reinforcement insert (14) joined together by a polymer material at least partially covering them, each reinforcement insert (12, 14) having a concave open cross section, notably being substantially U- or Q-shaped, the longitudinal directions of said reinforcement inserts (12, 14) being substantially perpendicular, **characterized in that**:
(a) an edge (16) of one end of the first reinforcement insert (12) presses against the second reinforcement insert (14) on the convex side thereof, along a part (18a-c) of one edge of an opening (18) passing through said second reinforcement insert (14), or
(b) one end of the first reinforcement insert (12) is fitted into said opening (18) passing through said second reinforcement insert on the convex side thereof, said end being in contact with a part (18a-c) of one edge of said opening (18),
said opening (18) having a shape and dimensions identical or substantially identical to the shape and dimensions of the cross section of said end of the first reinforcement insert (12), a polymer material at least partially covering said reinforcement inserts at least at their junction and forming at least one reinforcement element (20), said reinforcement element being substantially L-shaped, with a first leg (20a) extending from the first reinforcement insert (12), above said opening (18), and a second leg (20b) extending from the first leg (20a) and meeting a part (18d) of the edge of said opening (18), separate from the edge part (18a-c) along which the first reinforcement insert (12) presses or is in contact.

2. Assembly (10) according to Claim 1, **characterized in that** each leg (20a, 20b) of said at least one reinforcement element (20) extends parallel to the longitudinal direction of the reinforcement insert (12, 14) to which it is not connected.

3. Assembly (10) according to Claim 1 or 2, **characterized in that** the leg (20b) of said reinforcement element (20) that meets a part (18d) of the edge of said opening (18) passes through the opening (18) and extends beyond the latter.

4. Assembly (10) according to any one of Claims 1 to 3, **characterized in that** the polymer material forms at least one stiffening rib (22, 26) that extends from a part (18a-c) of the edge of the opening (18) along which the first reinforcement insert (12) presses or is in contact, in continuation of the first reinforcement insert (12), through the opening and beyond the latter.

5. Assembly (10) according to any one of Claims 1 to 4, **characterized in that** the polymer material forms intersecting stiffening ribs (24, 34, 36) on at least one of the faces of at least one reinforcement insert, said stiffening ribs extending substantially perpendicularly to the longitudinal direction of said insert and substantially parallel to the longitudinal direction of the other insert.

6. Assembly (10) according to any one of Claims 1 to 5, **characterized in that** an end part of the first reinforcement insert (12), having said edge (16) pressing against the second reinforcement insert (14) or said fitted end, is inclined with respect to the longitudinal direction of said first reinforcement insert (12), the leg (20b) of the reinforcement element that meets said opening edge part (18d) extending parallel to the longitudinal direction of the first reinforcement insert (12), in continuation of a wall of the latter.

7. Assembly (10) according to any one of Claims 1 to 6, **characterized in that** one or more stiffening ribs (28) extend parallel or substantially parallel to the longitudinal direction of the first reinforcement insert (12), inside the concavity defined by the second reinforcement insert (14), facing said opening (18), notably between opposite edges of the opening.

8. Technical front end of a motor vehicle, comprising at least one assembly (10) according to any one of Claims 1 to 7, wherein the second reinforcement insert (14) forms a horizontal, notably lower, cross member and the first reinforcement insert (12) forms a vertical upright.

9. Method for manufacturing an assembly (10) comprising a first longitudinal reinforcement insert (12) and a second longitudinal reinforcement insert (14), each reinforcement insert (12, 14) having a concave open cross section, notably being substantially U- or Q-shaped, said method comprising:
(i) a step of positioning said reinforcement inserts (12, 14) in a mold (40, 42, 44), wherein the reinforcement inserts (12, 14) are disposed such that their longitudinal directions are substantially perpendicular, and during which:
(a) an edge (16) of one end of the first reinforcement insert (12) is pressed against the second insert (14) on the convex side thereof, along a part (18a-c) of one edge of an opening (18) passing through said second reinforcement insert (14), or
(b) one end of the first reinforcement insert is fitted into said opening (18) passing through the second reinforcement insert (14) on the convex side thereof, said end being in contact with a part (18a-c) of one edge of said opening,
said opening (18) having a shape and dimensions identical or substantially identical to the shape and dimensions of the cross section of the first reinforcement insert (12),
(ii) a step of injecting a polymer material into the mold (40, 42, 44), during which a polymer material at least partially covers said reinforcement inserts (12, 14) at least at their junction and forms at least one reinforcement element (20) connecting the two reinforcement inserts (12, 14), said reinforcement element (20) being substantially L-shaped, with a first leg (20a) extending from the first reinforcement insert (12), above the opening (18), and a second leg (20b) extending from the first leg (20a) and meeting a part (18d) of the edge of said opening (18), separate from the edge part (18a-c) along which the first insert presses or is in contact.

10. Manufacturing method according to Claim 9, wherein
- during the first step (i), the reinforcement inserts (12, 14) are disposed in a first mold part (40) in a first direction (A1) perpendicular to the longitudinal directions of the first and second reinforcement inserts (12, 14), then a second mold part (42) is pressed against the first mold part (40) in said first direction (A1) and a third mold part (44) is pressed, from the concave side of the second reinforcement insert (44), against the first and second mold parts (40, 42) in a second direction (A2) parallel to the longitudinal direction of the first reinforcement insert (12), said third mold part (44) having a part (46) that passes through the opening (18) in the second reinforcement insert (14) so as to form said reinforcement element (20),
- after the injection step (ii), the first and second mold parts (40, 42) are separated by being moved apart parallel to said first direction (A1) and the third mold part (44) is removed by being moved away parallel to said second direction (A2).
